# DEMANDE DE BREVET EUROPEEN

(11) **EP 4 019 341 A1**
(43) Date de publication de la demande: **29.06.2022**
(21) Numéro de dépôt: 21215885.1
(22) Date de dépôt: 20.12.2021
(51) Int. Cl.: B60R 19/48, B60R 19/18

(54) **PIÈCE DE CARROSSERIE DE VÉHICULE AUTOMOBILE**

(30) Priorité: 23.12.2020 FR 2014065
(71) Demandeur: Compagnie Plastic Omnium SE, 69007 Lyon (FR)
(72) Inventeur: MOULIN, Gilles, 01150 SAINTE-JULIE (FR); LANDOULSI, Alaeddine, 01150 SAINTE-JULIE (FR)
(74) Mandataire: LLR

(57) **Abrégé**

L'invention concerne une pièce de carrosserie (1) de véhicule automobile comprenant un corps principal (10) comportant une région (11) destinée à être placée en regard d'un radar et une zone périphérique (13) de la région (11), dans laquelle la région (11) présente une épaisseur prédéterminée (E) inférieure à celle de la zone périphérique (13), et en ce que l'épaisseur prédéterminée (E) est choisie de manière à ce que l'atténuation des ondes radar au niveau de la région (11) soit inférieure à l'atténuation des ondes radar au niveau de la zone périphérique (13).

## Description

L'invention concerne une pièce de carrosserie automobile comprenant une région destinée à être placée en regard d'un radar. L'invention concerne également une méthode de fabrication d'une telle pièce.

On connaît déjà dans l'état la technique, des pièces de carrosserie de véhicule automobiles comprenant une partie destinée à être placée devant un radar, ou autrement dit ayant une fonction de radôme. Ainsi, il est indispensable que la partie de la pièce de carrosserie destinée à être placée devant le radar permette une bonne transmission des ondes radar qui la traversent. Pour optimiser la transmission des ondes, une épaisseur optimale de ladite partie de la pièce peut être obtenue par des essaies et des méthodes de calcul. Il est donc souhaitable d'appliquer cette épaisseur précise sur toutes les pièces de carrosserie ayant cette fonction. Or les pièces de carrosseries ayant la fonction radôme possèdent souvent des épaisseurs différentes suivant les modèles de véhicule. Ceci est notamment dû à l'ensemble de peintures appliquées à la pièce de carrosserie après le moulage qui change d'épaisseur d'un modèle à l'autre. Par exemple, l'épaisseur de la couche de base (« basecoat ») peut être plus ou moins importante selon les teintes. De ce fait, si l'on veut obtenir la même épaisseur dans la partie ayant la fonction de radôme sur plusieurs modèles de pièce de carrosserie peinte, il convient de prévoir des moules différents ce qui est très compliqué en termes de coût et de stockage des moules.

L'invention a notamment pour but de fournir une pièce de carrosserie de véhicule automobile comprenant une région destinée à être placée en regard d'un radar, dans laquelle cette région présente une épaisseur prédéterminée permettant une meilleure transmission des ondes radar.

A cet effet l'invention a pour objet une pièce de carrosserie de véhicule automobile comprenant un corps principal comportant une région destinée à être placée en regard d'un radar et une zone périphérique de la région, dans laquelle la région présente une épaisseur prédéterminée (E) inférieure à celle de la zone périphérique, et en ce que l'épaisseur prédéterminée (E) est choisie de manière à ce que l'atténuation des ondes radar au niveau de la région soit inférieure à l'atténuation des ondes radar au niveau de la zone périphérique.

La transparence aux ondes radar d'une région d'une pièce de carrosserie placée en regard d'un radar peut être améliorée en diminuant l'épaisseur de cette région. Il est souhaitable qu'une pièce de carrosserie soit fabriquée en série pour une meilleure productivité. La suppression de matière dans ladite région permet d'obtenir plus facilement l'épaisseur prédéterminée de la région.

Au sens de l'invention, une région destinée à être placée en regard d'un radar, est une région de pièce de carrosserie susceptible d'être traversée par les ondes d'un radar situé sur le véhicule. Ainsi cette région correspond sensiblement à la projection du cône formé par les ondes d'un radar sur la pièce de carrosserie.

On comprend que la « zone périphérique » de la région destinée à être placée en regard d'un radar est formée par la partie de la pièce de carrosserie située autour de la région, et au voisinage de la région.

Suivant d'autres caractéristiques optionnelles de la pièce de carrosserie prises seules ou en combinaison :
- L'épaisseur prédéterminée est obtenue par un enlèvement de matière au niveau de la région.
- L'épaisseur de la région est choisie à partir d'un ensemble de couples valeurs teintes de peinture / épaisseur assurant une transmission optimale des ondes radar pour ladite teinte. Cet ensemble de couples est obtenu par exemple par des mesures et calculs d'atténuation et réflexion des ondes en fonction de l'épaisseur, et également en fonction de paramètres tels que les propriétés diélectriques des matériaux utilisés pour la fabrication de la pièce, et en fonction de la teinte de peinture.
- Le choix de l'épaisseur prédéterminée prend en compte au moins l'un des paramètres suivants : matériau du corps principal, épaisseur de la région, peinture appliquée sur la face extérieure. Ainsi, le choix de l'épaisseur de la région est simple puisqu'il se fait parmi un ensemble de couples prédéterminés. On comprend que, dans le cas où les pièces de carrosserie de différents modèles sont peintes, l'épaisseur optimale de la région varie notamment en fonction de la peinture qui est appliquée d'un modèle à un autre.
- L'écart entre l'épaisseur prédéterminée et l'épaisseur de la zone périphérique est compris entre 0,1mm et 0,5mm.
- L'épaisseur de ladite région est comprise entre 2,14mm et 2,5mm.
- La région 11 présente une surface substantiellement plane pour une meilleure homogénéité de transparence aux ondes radar.
- Le matériau du corps principal est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrylonitrile styrène acrylate (ASA), le styrène acrylonitrile, un mélange d'acrylonitrile styrène acrylate et de polycarbonate, un mélange de polycarbonate et polytéréphtalate d'éthylène, un mélange de polypropylène et d'EPDM.
- La pièce de carrosserie comprend une face extérieure opposée à celle comprenant la région, la face extérieure étant destinée à être placée à l'extérieur du véhicule et revêtue d'une peinture. La peinture appliquée sur la surface de la pièce comprend notamment différentes couches ayant différentes épaisseurs telles que le primaire, la base et le vernis, qui permettent d'obtenir une peinture pour application automobile.

L'invention a également pour but de fournir une méthode permettant d'obtenir une pièce de carrosserie de véhicule automobile comprenant une région destinée à être placée en regard d'un radar, dans laquelle cette région présente une épaisseur prédéterminée permettant une meilleure transmission des ondes radar quelle que soit la teinte de la pièce.

L'invention a également pour objet un procédé de fabrication d'une pièce de carrosserie telle que décrite précédemment comprenant les étapes suivantes :
- on réalise un corps principal de la pièce de carrosserie par moulage à partir d'une matière plastique ;
- on fait fluer une quantité de matière plastique hors de la région, afin d'obtenir l'épaisseur prédéterminée de la région.

On obtient des pièces de carrosserie d'épaisseur constante et l'épaisseur prédéterminée (E) de la région est ajustée uniquement via les étapes de chauffage et fluage de la matière dans la région. Ainsi, le corps principal est simple à fabriquer en utilisant un seul moule pour différents modèles de pièce de carrosserie lorsque le corps principal est obtenu par moulage par injection.

Suivant d'autres caractéristiques optionnelles du procédé de fabrication prises seules ou en combinaison :
- On réalise le fluage au moyen d'un moyen chauffant, tel qu'un poinçon chauffant ou un poinçon à ultrason.
- Le procédé comporte les étapes suivantes :
   A : réaliser un corps principal de la pièce de carrosserie par moulage à partir d'une matière plastique,
   B : disposer la pièce de carrosserie sur un support,
   C : placer un moyen chauffant à proximité de la région ou dans la région de manière à faire fondre une quantité de matière de cette région,
   D : effectuer un fluage de la matière fondue dans la zone périphérique de manière à obtenir l'épaisseur prédéterminée (E) de la région.
- Le moyen chauffant présente une surface de contact destiné à venir en contact avec la région pour faire fondre une quantité de matière de cette région et définir la forme de la région par le fluage de la matière. Il est donc possible de réaliser le chauffage et le fluage par un même outil ce qui simplifie le procédé de fabrication. Par ailleurs, on comprend que l'épaisseur prédéterminée (E) est définie par la distance à parcourir par le moyen chauffant et la pression entre le moyen chauffant et le support.
- Ladite surface de contact est substantiellement plane pour obtenir une surface substantiellement plane de la région pour une meilleure homogénéité de transparence aux ondes radar.
- Le procédé de fabrication comprend une étape de peinture sur une face extérieure de la pièce de carrosserie. La peinture appliquée sur la surface de la pièce comprend notamment différentes couches ayant différentes épaisseurs telles que le primaire, la base et le vernis, qui permettent d'obtenir une peinture pour application automobile.
- L'étape de peinture est effectuée entre les étapes A et B, c'est-à-dire avant l'obtention de l'épaisseur prédéterminée de la région. Toutefois, cette étape de peinture peut également être effectuée après l'étape D, c'est-à-dire après l'obtention de l'épaisseur prédéterminée de la région.

Dans le cas où la pièce est peinte, l'épaisseur prédéterminée de la région est définie en fonction de la peinture qui est appliquée.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective schématique d'un exemple de pièce de carrosserie d'un véhicule automobile ;
[Fig. 2] la figure 2 est une vue d'arrière de la pièce de carrosserie de la figure 1 ;
[Fig. 3] la figure 3 est une vue schématique d'une étape d'un procédé de fabrication de la pièce de carrosserie de la figure 1 selon un mode de réalisation de l'invention ;
[Fig. 4] la figure 4 est une vue schématique d'une autre étape du procédé de fabrication de la pièce de carrosserie du mode de réalisation illustré à la figure 3.

### Description détaillée

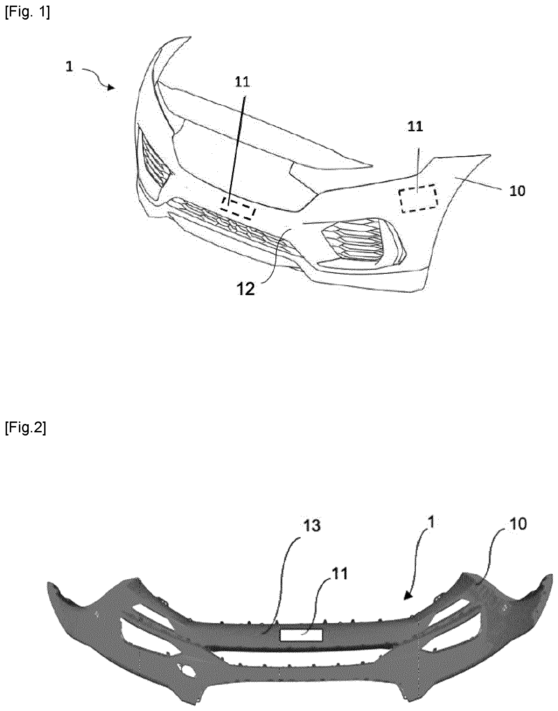

On a représenté sur la figure 1 un une pièce de carrosserie d'un véhicule automobile selon un mode de réalisation, désigné par la référence générale 1.

La figure 1 représente pièce de carrosserie de véhicule automobile qui est ici un parechoc 1 comprenant un corps principal 10 présentant des régions 11 destinées à être placées en regard d'un radar. On comprend que la pièce de carrosserie de véhicule automobile selon l'invention n'est pas limitée à un pare-chocs, il peut s'agir d'une autre pièce de carrosserie, par exemple une porte, un toit, un hayon, une aile.

Les radars placés derrière la pièce de carrosserie peuvent être de différents types, par exemple SRR (« short range radar » en anglais) utilisés pour les détections d'obstacles proches, MRR (« mid range radar » en anglais), et LRR (« long range radar » en anglais) utilisés pour l'assistance à la conduite. Ces radars fonctionnent généralement dans les bandes de fréquence 76-77GHz et 77-81 GHz.

La figure 2 est une vue d'arrière du parechoc 1 sur lequel est représenté une région 11 destinée à être placée en regard d'un radar, et une zone périphérique 13 de cette région 11. La région 11 présente une épaisseur prédéterminée (E) qui est inférieure à celle de la zone périphérique 13. Selon l'invention, l'épaisseur prédéterminée (E) est choisie de manière à ce que l'atténuation des ondes radar au niveau de la région 11 soit inférieure à l'atténuation des ondes radar au niveau de la zone périphérique 13.

Plus précisément, l'épaisseur prédéterminée (E) de la région est choisie à partir d'un ensemble de couples valeurs d'atténuation et réflexion des ondes radar / épaisseur de la région. Cet ensemble de couples est obtenu par exemple par des mesures et calculs d'atténuation et réflexion des ondes radars ou bien par des simulations.

L'épaisseur prédéterminée (E) est obtenue par un enlèvement de matière au niveau de la région (11), l'enlèvement étant réalisé par fluage.

Tel que visible aux figures 1, 3 et 4, la pièce de carrosserie 1 comprend une face extérieure 12 opposée à celle comprenant la région 11. Cette face extérieure 12 est destinée à être placée à l'extérieur du véhicule et revêtue d'une peinture. Ainsi, lorsqu'il s'agit d'une pièce de carrosserie peinte, le choix de l'épaisseur prédéterminée (E) prend en compte au moins l'un des paramètres suivants : matériau du corps principal 10, épaisseur de la région 11, peinture appliquée sur la face extérieure 12.

Le matériau du corps principal est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrylonitrile styrène acrylate (ASA), le styrène acrylonitrile, un mélange d'acrylonitrile styrène acrylate et de polycarbonate, un mélange de polycarbonate et polytéréphtalate d'éthylène, un mélange de polypropylène et d'EPDM.

Avantageusement, la région 11 présente une surface substantiellement plane pour une meilleure homogénéité de transparence aux ondes radar.

Dans l'exemple illustré, l'écart entre l'épaisseur prédéterminée (E) et l'épaisseur de la zone périphérique est comprise entre 0,1mm et 0,5mm. Selon un autre exemple, l'épaisseur de ladite région est comprise entre 2,14mm et 2,50mm.

Ces valeurs proviennent de mesure d'atténuation et de réflexion des ondes radar à travers différentes épaisseurs de pièce ou d'échantillon de pièce peintes.

A titre d'exemple, les mesures d'atténuation et de réflexion permettant d'obtenir les couple transparence aux ondes radar-épaisseur sont faites de la manière suivante :
- on sélectionne une peinture ayant une teinte souhaitée ;
- on utilise cette peinture pour peindre une pièce ou un échantillon de pièce ayant une épaisseur E, pour obtenir une région 11 ;
- on mesure la transmission et la réflexion des ondes radar à travers la région 11 ;
- on sélectionne le ou les épaisseurs E présentant des propriétés de transparence aux ondes radar satisfaisantes ;
- on recommence autant de fois que nécessaire, en particulier on effectue des mesures sur des pièces ou échantillons de pièces revêtus de différentes peintures, et notamment différentes teintes.

Ainsi, on obtient pour une teinte donnée, l'épaisseur permettant la transmission optimale des ondes radar. Il est ensuite possible de répéter le procédé pour différentes teintes. On obtient ainsi, des couples de valeurs teintes / épaisseurs assurant une transmission optimale des ondes radar pour la teinte donnée. C'est à partir de ces couples que l'on peut définir une épaisseur E pour une teinte de peinture donnée.

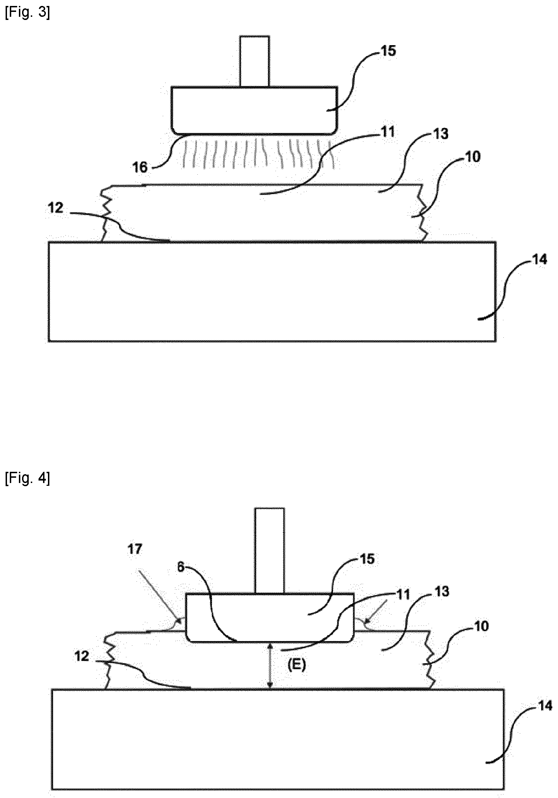

L'invention concerne également un procédé de fabrication d'une pièce de carrosserie telle que décrite précédemment. Un tel procédé de fabrication est illustré aux figures 3 et 4. Ce procédé comprend les étapes suivantes :
- on réalise un corps principal 10 de la pièce de carrosserie par moulage à partir d'une matière plastique ;
- on fait fluer une quantité de matière plastique hors de la région 11, afin d'obtenir l'épaisseur prédéterminée (E) de la région 11 comme visible à la figure 4.

Selon un mode de réalisation, on réalise le fluage grâce à un moyen chauffant 15, tel qu'un poinçon chauffant (qui émet directement de la chaleur) ou un poinçon à ultrason (qui émet des ultrasons qui échauffent la matière).

Le moyen chauffant 15 permet ainsi de faire fondre une quantité de matière plastique de la région 11, et de la faire fluer hors de la région 11.

Selon un exemple de réalisation, on réalise les étapes suivantes :
- A : réaliser un corps principal 10 de la pièce de carrosserie par moulage à partir d'une matière plastique,
- B : disposer la pièce de carrosserie sur un support 14 tel que visible à la figure 3,
- C : placer un moyen chauffant 15 à proximité de la région 11 ou dans la région 11 de manière à faire fondre une quantité de matière de cette région 11. Dans l'exemple illustré et tel que visible à la figure 4, le moyen chauffant 15 est placé dans la région 11.
- D : effectuer un fluage de la matière fondue dans la zone périphérique 13 de manière à obtenir l'épaisseur prédéterminée (E) de la région 11 comme visible à la figure 4.

Le moyen chauffant 15 selon ce mode de réalisation est constitué d'un poinçon à ultrason présentant une surface de contact 16 destiné à venir en contact avec la région 11 pour faire fondre une quantité de matière de cette région 11 et définir la forme de la région 11 par le fluage de la matière fondue 17 dans la zone périphérique 13. Comme visible aux figures 3 et 4, ladite surface de contact 16 est substantiellement plane. Selon d'autres modes de réalisation, cette surface de contact 16 peut également avoir des courbes assez faibles et présenter un galbe similaire à celui de la surface de contact. Le moyen chauffant 15 peut également être un dispositif d'émission de chaleur.

On comprend que l'épaisseur prédéterminée (E) est définie par la distance à parcourir par le moyen chauffant 15 et la pression entre le moyen chauffant 15 et le support 14. Pour ce faire, une unité de control peut être mise en place pour commander le déplacement du moyen chauffant 15 en fonction de l'épaisseur prédéterminée (E) souhaitée.

Avantageusement, le procédé de fabrication comprend une étape de peinture sur la face extérieure 12. Cette étape de peinture peut être effectuée entre les étapes A et B, c'est-à-dire avant l'obtention de l'épaisseur prédéterminée de la région ou après l'étape D, c'est-à-dire après l'obtention de l'épaisseur prédéterminée de la région. Dans le cas où la pièce est peinte, l'épaisseur prédéterminée de la région est définie en fonction de la peinture qui est appliquée.

L'invention n'est pas limitée aux modes de réalisation présentés et d'autres modes de réalisation apparaîtront clairement à l'homme du métier.

### Liste de références

- 1: pièce de carrosserie
- 10 :: corps principal
- 11: région
- 12 :: face extérieure
- 13 :: zone périphérique
- 14 :: support
- 15 :: moyen chauffant
- 16 :: surface de contact
- 17 :: matière fondue

## Revendications

1. Pièce de carrosserie (1) de véhicule automobile comprenant un corps principal (10) comportant une région (11) destinée à être placée en regard d'un radar et une zone périphérique (13) de la région (11), **caractérisée en ce que** la région (11) présente une épaisseur prédéterminée (E) inférieure à celle de la zone périphérique (13), et **en ce que** l'épaisseur prédéterminée (E) est choisie de manière à ce que l'atténuation des ondes radar au niveau de la région (11) soit inférieure à l'atténuation des ondes radar au niveau de la zone périphérique (13) et **en ce que** l'épaisseur prédéterminée (E) est obtenue par un enlèvement de matière au niveau de la région (11).

2. Pièce de carrosserie (1) selon la revendication précédente, dans laquelle l'épaisseur de la région (11) est choisie à partir d'un ensemble de couples de valeurs teintes de peinture / épaisseur assurant une transmission optimale des ondes radar pour ladite teinte.

3. Pièce de carrosserie (1) selon la revendication précédente, dans laquelle le choix de l'épaisseur prédéterminée (E) prend en compte au moins l'un des paramètres suivants : matériau du corps principal (10), peinture appliquée sur la face extérieure (12).

4. Pièce de carrosserie (1) selon l'une quelconque des revendications précédentes dans laquelle l'écart entre l'épaisseur prédéterminée (E) et l'épaisseur de la zone périphérique (13) est compris entre 0,1mm et 0,5mm.

5. Pièce de carrosserie (1) selon l'une quelconque des revendications précédentes dans laquelle l'épaisseur de ladite région est comprise entre 2,14mm et 2,5mm.

6. Pièce de carrosserie (1) selon l'une quelconque des revendications précédentes, dans laquelle la région (11) présente une surface substantiellement plane.

7. Pièce de carrosserie selon l'une quelconque des revendications précédentes dans laquelle le matériau du corps principal (10) est choisi parmi le polypropylène, le polycarbonate, le polyméthacrylate de méthyle, un polyamide, le polytéréphtalate d'éthylène (PET), un copolyester, l'acrylonitrile butadiène styrène, un mélange d'acrylonitrile butadiène styrène et de polycarbonate (ABS/PC), l'acrylonitrile styrène acrylate (ASA), le styrène acrylonitrile, un mélange d'acrylonitrile styrène acrylate et de polycarbonate, un mélange de polycarbonate et polytéréphtalate d'éthylène, un mélange de polypropylène et d'EPDM.

8. Procédé de fabrication d'une pièce de carrosserie (1) selon l'une quelconque des revendications précédentes comprenant les étapes suivantes :
- on réalise un corps principal (10) de la pièce de carrosserie (1) par moulage à partir d'une matière plastique ;
- on fait fluer une quantité de matière plastique hors de la région (11), afin d'obtenir l'épaisseur prédéterminée (E) de la région (11).

9. Procédé de fabrication selon la revendication précédente, dans lequel on réalise le fluage au moyen d'un moyen chauffant (15), tel qu'un poinçon chauffant ou un poinçon à ultrason.

10. Procédé de fabrication selon la revendication précédente, dans lequel le moyen chauffant (15) présente une surface de contact (16) destiné à venir en contact avec la région (11) pour faire fondre une quantité de matière de cette région (11) et définir la forme de la région (11) par le fluage de la matière.

11. Procédé de fabrication selon la revendication précédente, dans lequel ladite surface de contact (16) est substantiellement plane.

12. Procédé de fabrication selon l'une quelconque des revendications 8 à 11, comprenant une étape de peinture d'une face extérieure (12) de la pièce de carrosserie (1).

13. Procédé de fabrication selon la revendication précédente, dans lequel on réalise les étapes suivantes :
- A : réaliser un corps principal (10) de la pièce de carrosserie par moulage à partir d'une matière plastique,
- B : disposer la pièce de carrosserie sur un support (14),
- C : placer un moyen chauffant (15) à proximité de la région ou dans la région (11) de manière à faire fondre une quantité de matière de cette région (11),
- D : effectuer un fluage de la matière fondue dans la zone périphérique (13) de manière à obtenir l'épaisseur prédéterminée (E) de la région (11).

14. Procédé de fabrication selon la revendication précédente dans lequel une étape de peinture est effectuée entre les étapes A et B.

15. Procédé de fabrication selon la revendication 13 dans lequel une étape de peinture est effectuée après l'étape D.
